# NEUE EUROPÄISCHE PATENTSCHRIFT

(11) **EP 1 977 923 B2**
(45) Veröffentlichungstag und Bekanntmachung des Hinweises auf die Entscheidung über den Einspruch: **10.01.2018**
(45) Hinweis auf die Patenterteilung: 02.10.2013
(21) Anmeldenummer: 08005668.2
(22) Anmeldetag: 26.03.2008
(51) Int. Cl.: B60J 7/22

(54) **Windabweiser für ein Fahrzeugdach**
Wind deflector for vehicle roofs
Déflecteur d'air pour toit de véhicule

(30) Priorität: 02.04.2007 DE 102007015724
(43) Veröffentlichungstag der Anmeldung: 08.10.2008
(73) Patentinhaber: Webasto SE, 82131 Stockdorf (DE)
(72) Erfinder: Haas, Josef, 82319 Starnberg (DE)
(74) Vertreter: Epping - Hermann - Fischer

(56) Entgegenhaltungen:
- EP-A- 1 473 181
- EP-A- 1 595 731
- DE-A1- 3 621 773
- DE-A1- 3 722 361
- DE-A1- 10 206 091
- DE-A1- 10 232 913
- DE-C1- 4 444 630
- FR-A- 2 845 038
- US-A- 3 156 175

## Beschreibung

Die vorliegende Erfindung betrifft einen Windabweiser gemäß dem Oberbegriff von Anspruch 1. Ein solcher ist aus der EP 1 342 600 A2 bekannt.

Weitere gattungsgemäße Windabweiser sind aus dem Stand der Technik bekannt. So beschreibt die DE 102 06 091 A1 einen Windabweiser für die Dachöffnung eines Kraftfahrzeugs für eine Schiebe- oder Schiebehebedachkonstruktion, bei welchem ein aus unterschiedlichen Kunststoffkomponenten aufgebauter Windabweiserkörper verwendet wird, der aus einem die Formbeständigkeit und Festigkeit sichernden. Grundkörper und angespritzten Weichkunststoffelementen aufgebaut ist, die an allen für Geräuschbildung relevanten Stellen in gewünschter Formgebung angespritzt sind. Die DE 102 32 913 A1 beschreibet einen Windabweiser, welcher als einstückiges Zwei- oder Mehrkomponenten-Teil ausgebildet ist, das einen relativ harten Körper aufweist, an dem mindestens eine Zusatzkomponente aus relativ weicherem Werkstoff angeformt ist. Die Anbringung von weicheren Komponenten an den Windabweisern dieser beiden Druckschriften hat die Aufgabe, Geräuschbildungen an relevanten Stellen wie beispielsweise Klappergeräusche im Bereich des Kontaktes des Windabweisers mit dem Fahrzeugdach oder Windströmungsgeräusche im Bereich einer Spitze eines Windabweisers zu unterdrücken.

Die US 3,156,175 offenbart einen Windabweiser mit einem dünnen Streifen eines elastischen Materials und einem starren Stab, der den Streifen stützt.

Die DE 36 21 773 A1 offenbart einen Windabweiser für Schiebedächer von Fahrzeugen, der am vorderen Randbereich einer von einem längsverschiebbaren Deckel verschließbaren Dachöffnung quer zum Fahrzeug befestigt ist und der beim Öffnen des Daches durch Entspannen eines vorderen elastischen Bereiches des Windabweisers aus einer horizontalen, zusammen mit dem Deckel den vorderen Rand der Dachöffnung abdichtenden Versenkstellung um eine durch den elastischen Bereich gebildete Querachse in eine von der Kontur des Daches abstehende Betriebsstellung hoch schwenkt.

Die FR 2 845 038 A1 offenbart einen Windabweiser für ein Schiebedach eines Kraftfahrzeugs, mit einer flexiblen Stoffbahn, die dazu ausgebildet ist, mit einem festen Teil und einem mobilen Teil eines versenkbaren Windabweisers für das Schiebedach in einer Richtung senkrecht zu zwei gegenüberliegenden Kanten der Stoffbahn gespannt zu werden.

Nachteilig an den Windabweisern aus dem Stand der Technik ist einerseits, dass mehrere einzelne Weichelemente am Windabweiser angebracht werden müssen. Dies ist nur mittels vergleichsweiser komplexer Herstellungsprozesse möglich. Andererseits ist ein größerer Bereich der bekannten Windabweiser immer noch starr und steif ausgeführt und es muss genügend Bauraum zur Verfügung gestellt werden, um den Windabweiser berührungsfrei in eine Ruheposition unterhalb der Dachaußenfläche verstauen zu können. Es ist daher Aufgabe der vorliegenden Erfindung, einen Windabweiser zu schaffen, welcher die Geräuschentwicklung noch wirksamer unterdrückt, einfacher herstellbar ist, und auch in streifendem Kontakt zu dachfesten Elementen in eine Ruheposition verschwenkt werden und dabei aus Platzgründen in teilweise komprimierten Form gelagert werden kann.

Diese Aufgabe wird jeweils durch die Windabweiser gemäß den Ansprüchen 1 und 2 gelöst. Der erfindungsgemäße Windabweiser weist ein Netz auf, wie sie beispielsweise von Windschotts von Kabriofahrzeugen bekannt sind. Ein solches Netz wird so am Windabweiserkörper und entlang des Bereichs der Vorderkante der Dachöffnung befestigt, dass es beim Verschwenken des Windabweisers in die Betriebsstellung über einen sich bildenden Spalt zwischen der Vorderkante der Dachöffnung und dem Windabweiser gespannt wird. Zur Befestigung eines solchen Netzes am Windabweiserkörper wird das Netz auf der dem Windabweiser zugeordneten Kante in den Formköper bei dessen Ausformung durch einen Schäum- oder Spritzprozess eingeschäumt bzw. eingespritzt.

Ein Vorteil eines erfindungsgemäßen Windabweisers ist, dass er dadurch, dass er ein steifes Verstärkungsprofil aufweist, welches entlang eines wesentlichen Bereichs seiner Längsausdehnung von einem weicheren Formkörper umschlossen ist, der die Außenfläche des Windabweiserkörpers ausbildet, eine optimale Unterdrückung von Geräuschentwicklungen bietet. Durch die Umkapselung des Verstärkungsprofils mit einem weicheren Formkörper werden sowohl Geräuschentwicklungen durch die anströmende Luft, als auch Klappergeräusche in Kontaktbereichen zwischen dem Windabweiser sowohl in ausgefahrener Betriebsstellung als auch in versenkter Ruhestellung wirksam unterdrückt. Andererseits ist es durch die Umschließung des Verstärkungsprofils mit dem weicheren Formkörper möglich, den Windabweiser in eine Ruhestellung innerhalb eines Bauraums unter Verformung des weicheren Formkörpers zu versenken. Durch das aufgespannte Netz wird die Einströmung von Fahrtwind in den Spalt zwischen der Vorderkante der Dachöffnung und dem Windabweiser begrenzt bzw. das Strömungsverhalten der einströmenden Luft optimiert. Insgesamt wird somit ein Windabweiser zur Verfügung gestellt, welcher einfach und kostengünstig herstellbar ist, wenig Bauraum beansprucht und die Entstehung von Klapper- oder Windgeräuschen optimal unterdrückt.

Gemäß einem Aspekt der Erfindung ragt das Verstärkungsprofil an den beiden seitlichen Enden des Windabweiserkörpers aus dem Formkörper heraus und bildet an diesen beiden Enden jeweils ein Befestigungselement aus, mittels derer der Windabweiserkörper an einer entsprechenden Bewegungsmechanik, welche vorzugsweise mit der Mechanik zur Deckelbewegung gekoppelt ist, verschwenkbar befestigbar ist.

Um die Einbindung des Netzes in den Formkörper zu verbessern, ist das Netz gemäß einem zweiten Aspekt der Erfindung am Verstärkungsprofil befestigt. Bei einer besonders bevorzugten Ausführungsform der Erfindung ist dabei das Netz innerhalb des Formkörpers um einen Vorsprung des Versteifungsprofils geführt, um eine kraftschlüssige Verbindung zwischen dem Netz und dem Verstärkungsprofil zu gewährleisten. Weiterhin kann das Netz an einer Außenfläche des Formkörpers angeschraubt sein, wobei vorteilhafterweise im Bereich der Verschraubung das Netzmaterial eine Verstärkung wie beispielsweise ein aufgebrachtes Verstärkungsband entlang der Netzkante aufweist.

Weitere bevorzugte Ausführungsformen der Erfindung ergeben sich aus den Unteransprüchen.

Gemäß Anspruch 3 kann das Verstärkungsprofil auch vollständig von dem Formkörper umschlossen sein, wobei in diesem Falle separate Befestigungselemente am Windabweiserkörper vorzusehen sind. Diese können beispielsweise an den Windabweiser angeschraubt, angespritzt oder angeschäumt sein. Vorzugsweise besteht der Formkörper aus Gummi oder aus einem elastischen Polyurethan (PU)-Schaum. Bei einer weiteren bevorzugten Ausführungsform der Erfindung besteht der Formkörper aus einem porösen luftdurchlässigen Material, durch welches die anströmende Luft teilweise hindurchströmen kann, um beispielsweise die Entstehung von Wummergeräuschen im Fahrzeuginneren zu unterdrücken.

Bei einer besonders bevorzugten Ausführungsform der Erfindung weist der Formkörper einen dreieckigen Querschnitt auf, wobei vorzugsweise eine schräg ausgebildete, windabweisende Vorderfläche sowie eine zur Dachfläche im wesentlichen parallele Grundfläche und eine senkrechte Hinterseite die Dreiecksform des Formkörpers ausbilden.

Bei einer weiteren besonders bevorzugten Ausführungsform der Erfindung ist das Verstärkungsprofil als Hohlprofil ausgebildet.

Im Folgenden wird die Erfindung anhand der beigefügten Zeichnungen beispielhaft näher erläutert.
Dabei zeigen:
- Fig. 1a bis 1d: Querschnitte durch einen Windabweiserkörper, wobei die Querschnittsfläche im Wesentlichen dreieckig ausgestaltet ist (nicht erfindungsgemäße Ausführungsformen);
- Fig. 2a und 2b: Querschnitte durch einen Windabweiserkörper, wobei eine windabweisende Fläche sowie eine Hinterseite des Formkörpers im Wesentlichen parallel ausgebildet sind (nicht erfindungsgemäße Ausführungsformen); und
- Fig. 3a und 3b: erfindungsgemäße Windabweiser mit einem am Windabweiserkörper befestigten Netz.

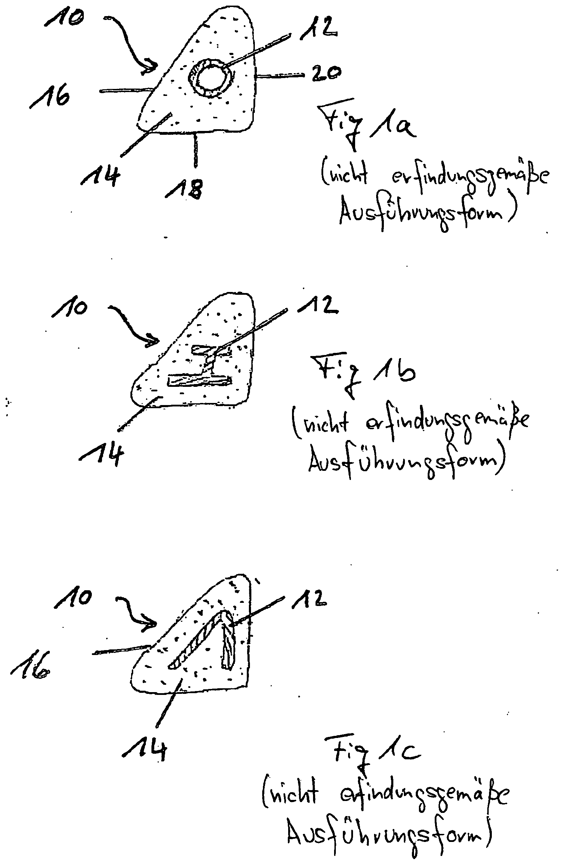

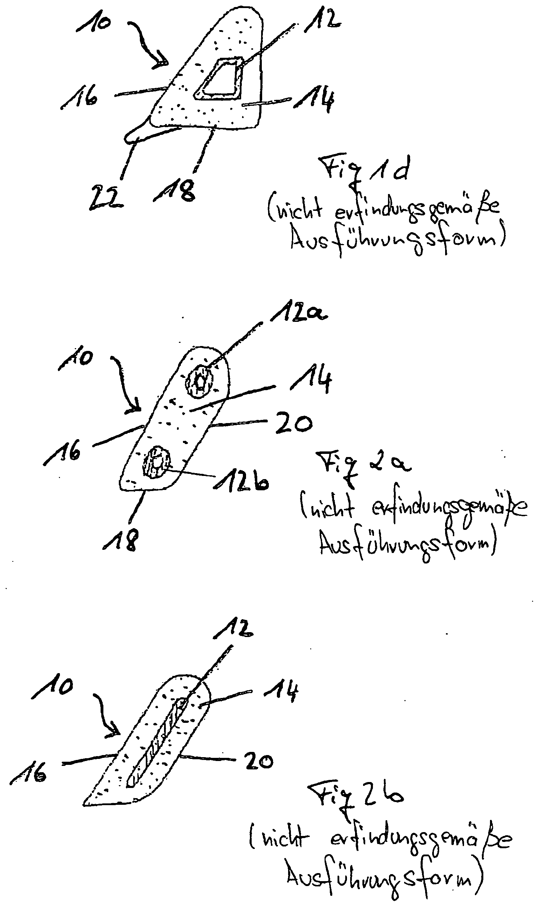

Die Figuren 1a bis 1d zeigen jeweils einen Windabweiserkörper 10, welcher eine schräge, windabweisende Fläche 16 in Fahrtrichtung vorne am Windabweiserkörper aufweist (nicht erfindungsgemäße Ausführungsformen). Da die Windabweiserkörper 10 der Fig. 1a bis 1d jeweils noch eine im wesentlichen zu einer hier nicht dargestellten Dachfläche eines Fahrzeugs parallele Grundfläche 18 sowie eine hierzu senkrechte Hinterseite 20 aufweisen, ist die Querschnittsfäche der abgebildeten Windabweiserkörper 10 näherungsweise dreieckig ausgebildet. Alle Windabweiserkörper 10 der Fig. 1a bis 1d weisen jeweils ein Verstärkungsprofil 12 auf, welches in einen weicheren, das Verstärkungsprofil umgebenden Formkörper 14 eingebettet ist. Während das Verstärkungsprofil 12 dem Windabweiserkörper 10 eine entsprechende Steifigkeit verleiht, bildet der Formkörper 14 die eigentliche Außenform des Windabweiserkörpers 10 aus. Damit weder bei der Berührung des Windabweiserkörpers 10 mit einer Dachfläche in einer ausgestellten Betriebsstellung noch mit dachfesten Elementen in einer versenkten Ruhestellung Klappergeräusche entstehen können, ist der das Verstärkungsprofil 12 umgebende Formkörper 14 aus einem elastischen Material wie beispielsweise Gummi oder aus einem Schaum wie beispielsweise einem PU-Schaum ausgeformt. Zur Herstellung wird hierzu das Verstärkungsprofil 12 mit einem entsprechenden elastischen Material umschäumt oder umspritzt. Der Formkörper 14 kann dabei auch so porös ausgebildet sein, dass die anströmende Luft den Formkörper zumindest teilweise durchströmen kann, um turbulente Strömungsanteile zu unterdrücken bzw. zumindest teilweise in eine laminare Durchströmung umzuwandeln. Wie in den Fig. 1a und 1d gezeigt, kann weiterhin das Verstärkungsprofil 12 als Hohlprofil ausgebildet sein, wie beispielsweise ein rohrförmiges Profil (Fig: 1a) oder ein Hohlprofil mit im wesentlichen zu den Außenflächen des Formkörpers 14 parallelen Außenflächen (Fig. 1d). Wie in den Fig. 1b und 1c gezeigt, kann aber auch auf die Verwendung eines Hohlprofils als Verstärkungsprofil verzichtet werden und das Verstärkungsprofil 12 zur Verbesserung der Festigkeit als näherungsweise H-förmiges Profil oder als V-Profil ausgebildet sein. Bei der Verwendung eines V-förmigen Verstärkungsprofils 12 gemäß der Fig. 1c sind die beiden Schenkel des Profils parallel zur vorderen, windabweisenden Fläche 16 bzw. zur Hinterseite 20 ausgerichtet. Der in der Fig. 1d abgebildete Windabweiserkörper 10 weist weiterhin in dem Eckbereich, in dem die windabweisende Fläche 16 und die Grundfläche 18 aufeinander treffen, eine Lippe 22 auf, welche dazu dient einen Spalt zwischen dem ausgestellten Windabweiserkörper 10 in Betriebsstellung und der angrenzenden, hier nicht abgebildeten Vorderkante einer Dachöffnung mindestens teilweise abzudecken, um eine Einströmung von Fahrtwind in diesen Spalt zu verhindern. Die Lippe 22 ist vorzugsweise direkt an den Formkörper 14 angeformt und weist somit wie dieser elastische Eigenschaften auf, sodass sie beispielsweise unter elastischer Verformung gegen die Dachfläche andrückbar ist und dadurch die Dichtungswirkung verbessert.

Alternativ zu den dreieckigen Querschnitten der Windabweiserkörper der Fig. 1a bis 1d ist bei den Windabweiserkörpern der Fig. 2a und 2b eine windabweisende Fläche 16 sowie eine Hinterseite 20 im Wesentlichen parallel zueinander ausgeführt (nicht erfindungsgemäße Ausführungsformen).

Beispielhaft und grundsätzlich für alle Windabweiserkörper einsetzbar sind in der Fig. 2a in dem dort abgebildeten Windabweiserkörper zwei Verstärkungsprofile 12a und 12b innerhalb des Formkörpers 14 ausgeführt. In der Fig. 2b ist als weitere Alternative als Verstärkungsprofil 12 ein flachbandartiges Material eingesetzt.

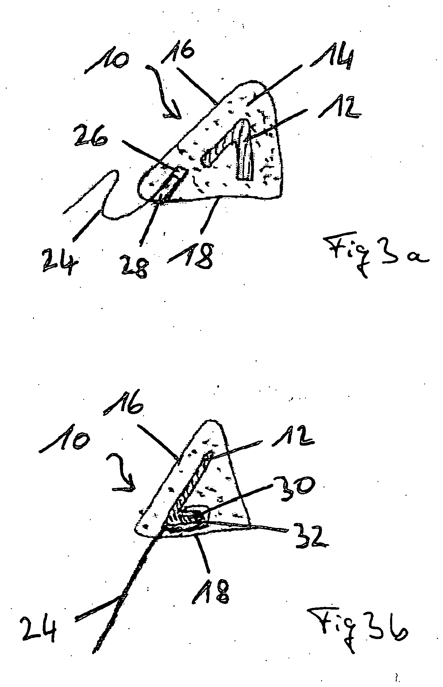

Im Unterschied zu den bisher gezeigten Windabweiserkörpern ist an den erfindungsgemäßen Windabweiserkörpern der Fig. 3a und 3b jeweils ein Windabweiserkörper 10 abgebildet, an dem ein Netz 24 befestigt ist, welches an dem dem Windabweiserkörper 10 abgewandten Ende (hier nicht dargestellt) dachfest im Bereich einer Vorderkante der Dachöffnung ebenfalls befestigt ist. Beim Ausfahren oder Verschwenken solcher Windabweiserkörper von einer versenkten Ruhestellung (wie in Fig. 3a gezeigt) in eine ausgestellte Betriebsstellung . (siehe Fig. 3b) wird das Netz 24 aufgrund seiner entsprechend angepassten Länge gespannt und deckt so einen Spalt zwischen Windabweiserkörper 10 und einer Vorderkante der Dachöffnung ab, damit nur ein Teil der anströmenden Luft (in Bildrichtung von links kommend) durch das Netz 24 hindurch tritt und Turbulenzen innerhalb dieser Luftströmung vermindert werden. So wird ein turbulentes Einströmen von Fahrtwind in das Fahrzeuginnere vermieden bzw. Wummergeräusche im Fahrzeuginneren unterdrückt. Das Netz 24 ist, wie in der Fig. 3b dargestellt, fest mit seinem Ende innerhalb des Windabweiserkörpers 10 angeordnet, indem es vom Formkörper 14 an diesem Ende umschlossen, also umschäumt oder umspritzt wird. Hierzu weist das Verstärkungsprofil 12 der Fig. 3b einen Vorsprung 30 auf, um den das Netz 24 mittels einer Umfaltung 32 so herum gelegt ist, dass nach dem Umgeben von Vorsprung 30 und Umfaltung 32 mit dem Formkörper 14 auch eine kraftschlüssige Verbindung zwischen dem Netz 24 und dem Vorsprung 30 entsteht. Somit ist eine besonders belastbare Fixierung des Netzes 24 innerhalb des Windweiserkörpers 10 gewährleistet. Der Vorsprung 30 ist in diesem Fall im wesentlichen parallel zur Grundfläche 18 orientiert, während der längere Schenkel des näherungsweise V-förmig ausgestalteten Verstärkungsprofils 12 im wesentlichen parallel zur in Fahrtrichtung vorn liegender windabweisender Fläche 16 angeordnet ist.

### Bezugszeichenliste

- 10: Windabweiserkörper
- 12a, b: Verstärkungsprofil
- 14: Formkörper
- 16: Windabweisende Fläche
- 18: Grundfläche
- 20: Hinterseite
- 22: Lippe
- 24: Netz
- 26: Nut
- 28: Klammer
- 30: Vorsprung
- 32: Umfaltung
- 34: Falz

## Patentansprüche

1. Windabweiser für ein Fahrzeugdach mit einer innerhalb einer festen Dachaußenhaut eines Fahrzeugs angeordneten Dachöffnung und einem Deckel zum wahlweisen Verschließen und mindestens teilweisen Öffnen der Dachöffnung, mit einem Windabweiserkörper (10), der im Wesentlichen entlang einer Vorderkante der Dachöffnung anordenbar und so ausgebildet ist, dass er am Fahrzeugdach zwischen einer versenkten Ruhestellung und einer ausgestellten Betriebsstellung verschwenkbar ist, wobei der Windabweiserkörper mindestens ein steifes Verstärkungsprofil (12) aufweist, welches entlang eines wesentlichen Bereichs seiner Längsausdehnung von einem weicheren Formkörper (14) umschlossen ist, der die Außenfläche des Windabweiserkörpers ausbildet, wobei der Windabweiser weiterhin ein Netz (24) aufweist, welches am Windabweiserkörper (10) befestigt ist, indem es teilweise in den Formkörper (14) eingeschäumt oder eingespritzt ist, und entlang der Vorderkante der Dachöffnung so befestigbar ist, dass es beim Verschwenken des Windabweisers in die Betriebsstellung gespannt wird **dadurch gekennzeichnet, dass** das Verstärkungsprofil (12) an den beiden seitlichen Enden des Windabweiserkörpers (10) aus dem Formkörper (14) herausragt und an den beiden Enden jeweils ein Befestigungselement ausbildet, mittels derer der Windabweiserkörper verschwenkbar befestigbar ist.

2. Windabweiser für ein Fahrzeugdach mit einer innerhalb einer festen Dachaußenhaut eines Fahrzeugs angeordneten Dachöffnung und einem Deckel zum wahlweisen Verschließen und mindestens teilweisen Öffnen der Dachöffnung, mit einem Windabweiserkörper (10), der im Wesentlichen entlang einer Vorderkante der Dachöffnung anordenbar und so ausgebildet ist, dass er am Fahrzeugdach zwischen einer versenkten Ruhestellung und einer ausgestellten Betriebsstellung verschwenkbar ist, wobei der Windabweiserkörper mindestens ein steifes Verstärkungsprofil (12) aufweist, welches entlang eines wesentlichen Bereichs seiner Längsausdehnung von einem weicheren Formkörper (14) umschlossen ist, der die Außenfläche des Windabweiserkörpers ausbildet, wobei der Windabweiser weiterhin ein Netz (24) aufweist, welches am Windabweiserkörper (10) befestigt ist, indem es teilweise in den Formkörper (14) eingeschäumt oder eingespritzt ist, und entlang der Vorderkante der Dachöffnung so befestigbar ist, dass es beim Verschwenken des Windabweisers in die Betriebsstellung gespannt wird, **dadurch gekennzeichnet, dass** das Netz (24) ferner am Verstärkungsprofil (12) befestigt ist.

3. Windabweiser nach Anspruch 2, **dadurch gekennzeichnet, dass** das Verstärkungsprofil (12) vollständig von dem Formkörper (14) umschlossen ist.

4. Windabweiser nach einem der vorhergehenden Ansprüche, **dadurch gekennzeichnet, dass** der Formkörper (14) aus Gummi besteht.

5. Windabweiser nach einem der vorhergehenden Ansprüche 1 bis 3, **dadurch gekennzeichnet, dass** der Formkörper (14) aus einem PU-Schaum besteht.

6. Windabweiser nach einem der vorhergehenden Ansprüche, **dadurch gekennzeichnet, dass** der Formkörper (14) aus einem porösen, luftdurchlässigen Material besteht.

7. Windabweiser nach Anspruch 2, **dadurch gekennzeichnet, dass** das Netz (24) innerhalb des Formkörpers (14) um einen Vorsprung (30) des Verstärkungsprofils (12) geführt ist.

8. Windabweiser nach einem der vorhergehenden Ansprüche, **dadurch gekennzeichnet, dass** der Formkörper (14) einen dreieckigen Querschnitt aufweist.

9. Windabweiser nach einem der vorhergehenden Ansprüche, **dadurch gekennzeichnet, dass** das Verstärkungsprofil (12) ein Hohlprofil ist.

## Claims

1. Wind deflector for a vehicle roof having a roof opening arranged within a fixed outer roof skin of a vehicle and a cover for selectively closing and at least partially opening the roof opening, having a wind deflector body (10) which can be arranged substantially along a front edge of the roof opening and is designed such that it can be pivoted on the vehicle roof between a lowered inoperative position and a deployed operative position, wherein the wind deflector body has at least one rigid reinforcing profile (12) which is enclosed along a substantial region of its longitudinal extent by a softer moulding (14) which forms the outer surface of the wind deflector body, wherein the wind deflector furthermore has a mesh (24) which is fastened to the wind deflector body (10) by being partially foamed or injection-moulded into the moulding (14) and can be fastened along the front edge of the roof opening such that it is tensioned when the wind deflector is pivoted into the operative position, **characterized in that** the reinforcing profile (12) projects from the moulding (14) at the two lateral ends of the wind deflector body (10) and forms at the two ends a respective fastening element by means of which the wind deflector body can be fastened in a pivotable manner.

2. Wind deflector for a vehicle roof having a roof opening arranged within a fixed outer roof skin of a vehicle and a cover for selectively closing and at least partially opening the roof opening, having a wind deflector body (10) which can be arranged substantially along a front edge of the roof opening and is designed such that it can be pivoted on the vehicle roof between a lowered inoperative position and a deployed operative position, wherein the wind deflector body has at least one rigid reinforcing profile (12) which is enclosed along a substantial region of its longitudinal extent by a softer moulding (14) which forms the outer surface of the wind deflector body, wherein the wind deflector furthermore has a mesh (24) which is fastened to the wind deflector body (10) by being partially foamed or injection-moulded into the moulding (14) and can be fastened along the front edge of the roof opening such that it is tensioned when the wind deflector is pivoted into the operative position, **characterized in that** the mesh (24) is further fastened to the reinforcing profile (12).

3. Wind deflector according to Claim 2, **characterized in that** the reinforcing profile (12) is completely enclosed by the moulding (14).

4. Wind deflector according to one of the preceding claims, **characterized in that** the moulding (14) consists of rubber.

5. Wind deflector according to one of the preceding Claims 1 to 3, **characterized in that** the moulding (14) consists of a PU foam.

6. Wind deflector according to one of the preceding claims, **characterized in that** the moulding (14) consists of a porous, air-permeable material.

7. Wind deflector according to Claim 2, **characterized in that** the mesh (24) is guided within the moulding (14) around a projection (30) of the reinforcing profile (12).

8. Wind deflector according to one of the preceding claims, **characterized in that** the moulding (14) has a triangular cross section.

9. Wind deflector according to one of the preceding claims, **characterized in that** the reinforcing profile (12) is a hollow profile.

## Revendications

1. Déflecteur d'air pour un toit de véhicule comprenant une ouverture de toit disposée à l'intérieur d'un revêtement extérieur fixe de toit d'un véhicule et un couvercle pour la fermeture et l'ouverture au moins partielle sélectives de l'ouverture de toit, comprenant un corps déflecteur d'air (10) qui peut être disposé essentiellement le long d'une arête avant de l'ouverture de toit et qui est réalisé de telle sorte qu'il puisse pivoter au niveau du toit du véhicule entre une position de repos renfoncée et une position fonctionnelle sortie, le corps déflecteur d'air présentant au moins un profilé de renforcement rigide (12), lequel est entouré le long d'une région considérable de son étendue longitudinale par un corps moulé plus souple (14), qui constitue la surface extérieure du corps déflecteur d'air, le déflecteur d'air présentant en outre un filet (24), lequel est fixé au corps déflecteur d'air (10) par moussage ou injection partielle dans le corps moulé (14), et peut être fixé le long de l'arête avant de l'ouverture de toit de telle sorte qu'il soit tendu dans la position fonctionnelle lors du pivotement du déflecteur d'air, **caractérisé en ce que** le profilé de renforcement (12) fait saillie au niveau des deux extrémités latérales du corps déflecteur d'air (10) hors du corps moulé (14) et constitue aux deux extrémités à chaque fois un élément de fixation au moyen duquel le corps déflecteur d'air peut être fixé de manière pivotante.

2. Déflecteur d'air pour un toit de véhicule comprenant une ouverture de toit disposée à l'intérieur d'un revêtement extérieur fixe de toit d'un véhicule et un couvercle pour la fermeture et l'ouverture au moins partielle sélectives de l'ouverture de toit, comprenant un corps déflecteur d'air (10) qui peut être disposé essentiellement le long d'une arête avant de l'ouverture de toit et qui est réalisé de telle sorte qu'il puisse pivoter au niveau du toit du véhicule entre une position de repos renfoncée et une position fonctionnelle sortie, le corps déflecteur d'air présentant au moins un profilé de renforcement rigide (12), lequel est entouré le long d'une région considérable de son étendue longitudinale par un corps moulé plus souple (14), qui constitue la surface extérieure du corps déflecteur d'air, le déflecteur d'air présentant en outre un filet (24), lequel est fixé au corps déflecteur d'air (10) par moussage ou injection partielle dans le corps moulé (14), et peut être fixé le long de l'arête avant de l'ouverture de toit de telle sorte qu'il soit tendu dans la position fonctionnelle lors du pivotement du déflecteur d'air, **caractérisé en ce que** le filet (24) est en outre fixé au profilé de renforcement (12) .

3. Déflecteur d'air selon la revendication 2, **caractérisé en ce que** le profilé de renforcement (12) est complètement entouré par le corps moulé (14) .

4. Déflecteur d'air selon l'une quelconque des revendications précédentes, **caractérisé en ce que** le corps moulé (14) se compose de caoutchouc.

5. Déflecteur d'air selon l'une quelconque des revendications 1 à 3, **caractérisé en ce que** le corps moulé (14) se compose d'une mousse de polyuréthane.

6. Déflecteur d'air selon l'une quelconque des revendications précédentes, **caractérisé en ce que** le corps moulé (14) se compose d'un matériau poreux perméable à l'air.

7. Déflecteur d'air selon la revendication 2, **caractérisé en ce que** le filet (24) est guidé à l'intérieur du corps moulé (14) autour d'une saillie (30) du profilé de renforcement (12).

8. Déflecteur d'air selon l'une quelconque des revendications précédentes, **caractérisé en ce que** le corps moulé (14) présente une section transversale triangulaire.

9. Déflecteur d'air selon l'une quelconque des revendications précédentes, **caractérisé en ce que** le profilé de renforcement (12) est un profilé creux.
